# EUROPEAN PATENT APPLICATION

(11) **EP 4 280 728 A1**
(43) Date of publication of application: **22.11.2023**
(21) Application number: 21919440.4
(22) Date of filing: 18.01.2021
(51) Int. Cl.: H04W 72/02, H04W 72/08, H04W 4/40

(54) **TERMINAL, AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2021/001535
(87) International publication number: WO 2022/153547

(57) **Abstract**

A terminal includes a transmission unit configured to select a resource according to partial sensing in a resource pool; a reception unit configured to receive control information from another terminal in the resource pool during a first period for reevaluation or preemption checking; and a control unit configured to perform reevaluation or preemption checking of the selected resource, based on the control information.

## Description

### [FIELD OF THE INVENTION]

The present invention relates to a terminal and a communication method in a wireless communication system.

### [BACKGROUND OF THE INVENTION]

In LTE (Long Term Evolution) and LTE successor systems (e.g., LTE-A (LTE Advanced), NR (New Radio) (also referred to as 5G)), a D2D (Device to Device) technology in which terminals communicate directly with each other without using base stations is being discussed (e.g., Non-Patent Document 1).

The D2D reduces traffic between the terminals and the base stations and enables communication between the terminals even when the base stations are unable to communicate during a disaster, etc. Although the 3GPP (3rd Generation Partnership Project) refers to D2D as a "sidelink," the more generic term D2D is used herein. However, in the description of embodiments described below, the sidelink is also used as needed.

The D2D communication is broadly classified into: D2D discovery for discovering other terminals capable of communication; and D2D communication (D2D direct communication, direct communication between terminals, etc.,) for direct communication between terminals. Hereinafter, when D2D communication and D2D discovery are not specifically distinguished, it is simply called D2D. A signal sent and received by D2D is called a D2D signal. Various use cases of V2X (Vehicle to Everything) services in NR have been discussed (e.g., Non-Patent Document 2).

### [Citation List]

### [Non-Patent Document]

[Non-Patent Document 1] 3GPP TS 38.211 V16.4.0 (2020-12)
[Non-Patent Document 2] 3GPP TR 22.886 V15.1.0 (2017-03)

### SUMMARY OF THE INVENTION

### [TECHNICAL PROBLEM]

Power saving has been discussed as an enhancement of the NR sidelink. For example, in the resource allocation mode 2, in which the terminal autonomously selects a resource, the terminal performs partial sensing to sense the limited resources in the sensing window and, based on the result, selects available resource candidates from the resource selection window.

In addition, eURLLC (enhanced Ultra Reliable Low Latency Communication) is being discussed with inter-UE coordination as a baseline. For example, the terminal 20A may share information indicating a resource set with the terminal 20B, and terminal 20B may take this information into account in selecting resources for transmission.

Here, in resource allocation mode 2, no method is specified for performing reevaluation or preemption checking on resources selected based on the partial sensing, so that reliability or delay performance of sidelink transmission may be degraded.

In view of the above, the present invention has been made to improve the communication reliability at the time of autonomous resource selection in direct communication between terminals.

### [SOLUTION TO PROBLEM]

According to the disclosed technology, a terminal includes: a transmission unit configured to select a resource according to partial sensing in a resource pool; a reception unit configured to receive control information from another terminal in the resource pool during a first period for reevaluation or preemption checking; and a control unit configured to perform reevaluation or preemption checking of the selected resource, based on the control information.

### [ADVANTAGEOUS EFFECTS OF INVENTION]

According to the disclosed technique, the communication reliability can be improved at the time of autonomous resource selection in direct communication between terminals.

### BRIEF DESCRIPTION OF THE DRAWINGS

[Fig. 1] Fig. 1 is a drawing illustrating V2X.
[Fig. 2] Fig. 2 is a drawing illustrating an example (1) of a V2X transmission mode.
[Fig. 3] Fig. 3 is a drawing illustrating an example (2) of a V2X transmission mode.
[Fig. 4] Fig. 4 is a drawing illustrating an example (3) of a V2X transmission mode.
[Fig. 5] Fig. 5 is a drawing illustrating an example (4) of a V2X transmission mode.
[Fig. 6] Fig. 6 is a drawing illustrating an example (5) of a V2X transmission mode.
[Fig. 7] Fig. 7 is a drawing illustrating an example (1) of a V2X communication type.
[Fig. 8] Fig. 8 is a drawing illustrating an example (2) of a V2X communication type.
[Fig. 9] Fig. 9 is a drawing illustrating an example (3) of a V2X communication type.
[Fig. 10] Fig. 10 is a sequence diagram illustrating an example (1) of V2X operation.
[Fig. 11] Fig. 11 is a sequence diagram illustrating an example (2) of V2X operation.
[Fig. 12] Fig. 12 is a sequence diagram illustrating an example (3) of V2X operation.
[Fig. 13] Fig. 13 is a sequence diagram illustrating an example (4) of V2X operation.
[Fig. 14] Fig. 14 is a drawing illustrating an example of a sensing operation.
[Fig. 15] Fig. 15 is a flowchart illustrating an example of a preemption operation.
[Fig. 16] Fig. 16 is a drawing illustrating an example of a preemption operation.
[Fig. 17] Fig. 17 is a drawing illustrating an example of a partial sensing operation.
[Fig. 18] Fig. 18 is a drawing illustrating an example of reevaluation or preemption checking.
[Fig. 19] Fig. 19 is a flowchart illustrating an example of communication in an embodiment of the present invention.
[Fig. 20] Fig. 20 is a drawing illustrating an example of resource selection according to partial sensing in an embodiment of the present invention.
[Fig. 21] Fig. 21 is a drawing illustrating an example (1) of reevaluation or preemption checking in an embodiment of the present invention.
[Fig. 22] Fig. 22 is a drawing illustrating an example (2) of reevaluation or preemption checking in an embodiment of the present invention.
[Fig. 23] Fig. 23 is a drawing illustrating an example of a functional configuration of a base station 10 in an embodiment of the present invention.
[Fig. 24] Fig. 24 is a drawing illustrating an example of a functional configuration of a terminal 20 in an embodiment of the present invention.
[Fig. 25] Fig. 25 is a drawing illustrating an example of a hardware configuration of the base station 10 or the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

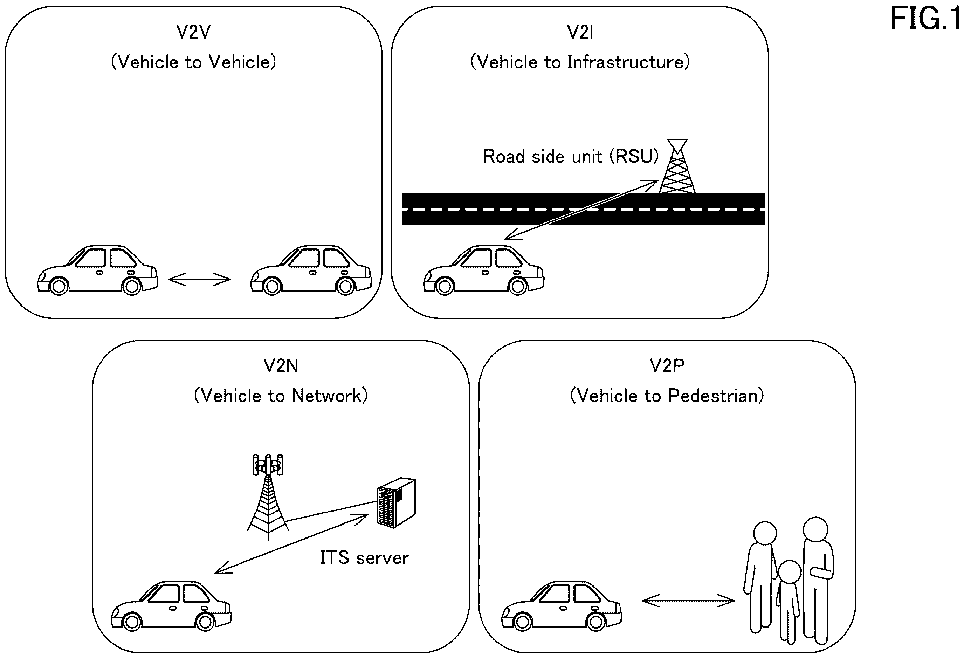

Fig. 1 is a drawing illustrating V2X. In 3GPP, enhancing D2D functions to realize V2X (Vehicle to Everything) or eV2X (enhanced V2x) has been discussed and specifications are being developed. As illustrated in Fig. 1, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on roadside; V2N (Vehicle to Network) referring to a form of communication performed between a vehicle and an ITS server; and V2P (Vehicle to Pedestrian) referring to a form of communication performed between a vehicle and a mobile terminal that is held by a pedestrian.

Further, in 3GPP, V2X using LTE/NR's cellular communication and communication between terminals has been discussed. V2X using cellular communication may be referred to as cellular V2X. In NR V2X, discussions have been performed to realize higher system capacity, reduced latency, higher reliability, and QoS (Quality of Service) control.

With respect to LTE V2X or NR V2X, it is assumed that discussions may be not limited to 3GPP specifications in the future. For example, it is assumed to be discussed on: how to secure interoperability; how to reduce cost by implementing higher layers; how to use or how to switch multiple RATs (Radio Access Technologies); how to handle regulations of each country; how to obtain and distribute data of the LTE/NR V2X platform; and how to manage and use databases.

In an embodiment of the present invention, a form of embodiment is mainly assumed in which communication apparatuses are mounted on vehicles. However, an embodiment of the present invention is not limited to such a form. For example, communication apparatuses may be terminals held by people, may be apparatuses mounted on drones or aircrafts, or may be base stations, RSUs, relay stations (relay nodes), terminals capable of scheduling, etc.

It should be noted that SL (Sidelink) may be distinguished from UL (Uplink) or DL (Downlink) based on any one of, or any combination of the following 1) through 4). Furthermore, SL may be referred to as a different name.
1) Resource arrangement in the time domain
2) Resource arrangement in the frequency domain
3) Synchronization signal that should be referred to (including SLSS (Sidelink Synchronization Signal))
4) Reference signal that is used for pass loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocating SL resources to terminal 20, Mode 3 and Mode 4 are defined. In Mode 3, transmission resources are dynamically allocated using a DCI (Downlink Control Information) that is transmitted from a base station 10 to a terminal 20. Further, in Mode 3, SPS (Semi Persistent Scheduling) is enabled (available). In Mode 4, the terminal 20 autonomously selects transmission resources from a resource pool.

It should be noted that a slot in an embodiment of the present invention may be read as (replaced with) a symbol, a mini slot, a subframe, a radio frame, or a TTI (Transmission Time Interval). Further, a cell in an embodiment of the present invention may be read as (replaced with) a cell group, a carrier component, a BWP (bandwidth part), a resource pool, a resource, a RAT (Radio Access Technology), a system (including a wireless LAN), etc.

Note that, in an embodiment of the present invention, the terminal 20 is not limited to a V2X terminal, but may be any type of terminal that performs D2D communication. For example, the terminal 20 may be a terminal carried by a user, such as a smart phone, or an IoT (Internet of Things) device, such as a smart meter.

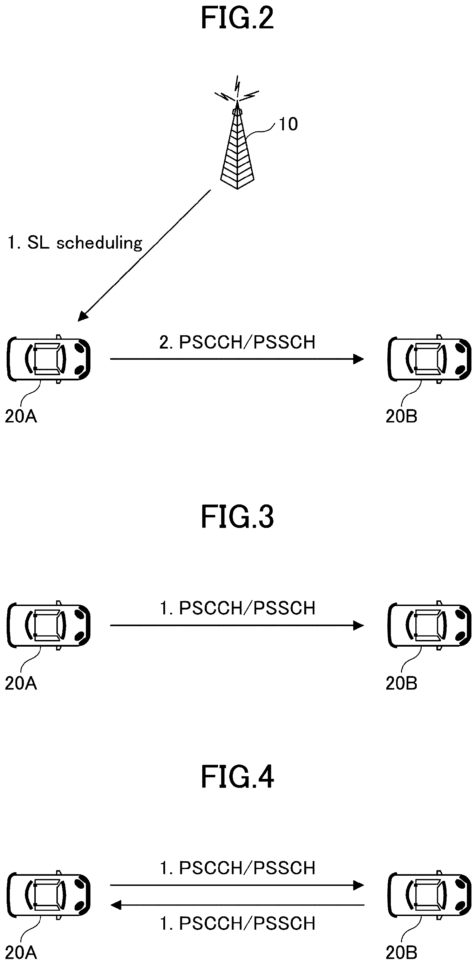

Fig. 2 is a drawing illustrating an example (1) of a V2X transmission mode. In a transmission mode of sidelink communication illustrated in Fig. 2, in step 1, a base station 10 transmits a sidelink scheduling to a terminal 20A. Next, the terminal 20A transmits PSCCH (Physical Sidelink Control Channel) and PSSCH (Physical Sidelink Shared Channel) to a terminal 20B based on the received scheduling (step 2). The transmission mode of sidelink communication illustrated in Fig. 2 may be referred to as a sidelink transmission mode 3 in LTE. In the sidelink transmission mode 3 in LTE, Uu based sidelink scheduling is performed. Uu is a radio interface between UTRAN (Universal Terrestrial Radio Access Network) and UE (User equipment). It should be noted that the transmission mode of sidelink communication illustrated in Fig. 2 may be referred to as a sidelink transmission mode 1 in NR.

Fig. 3 is a drawing illustrating an example (2) of a V2X transmission mode. In a transmission mode of sidelink communication illustrated in Fig. 3, in step 1, a terminal 20A transmits PSCCH and PSSCH to a terminal 20B using autonomously selected resources. The transmission mode of sidelink communication illustrated in Fig. 3 may be referred to as a sidelink transmission mode 4 in LTE. In the sidelink transmission mode 4 in LTE, the UE itself performs resource selection.

Fig. 4 is a drawing illustrating an example (3) of a V2X transmission mode. In a transmission mode of sidelink communication illustrated in Fig. 4, in step 1, a terminal 20A transmits PSCCH and PSSCH to a terminal 20B using autonomously selected resources. Similarly, the terminal 20B transmits PSCCH and PSSCH to the terminal 20A using autonomously selected resources (step 1). The transmission mode of sidelink communication illustrated in Fig. 4 may be referred to as a sidelink transmission mode 2a in NR. In the sidelink transmission mode 2 in NR, the terminal 20 itself performs resource selection.

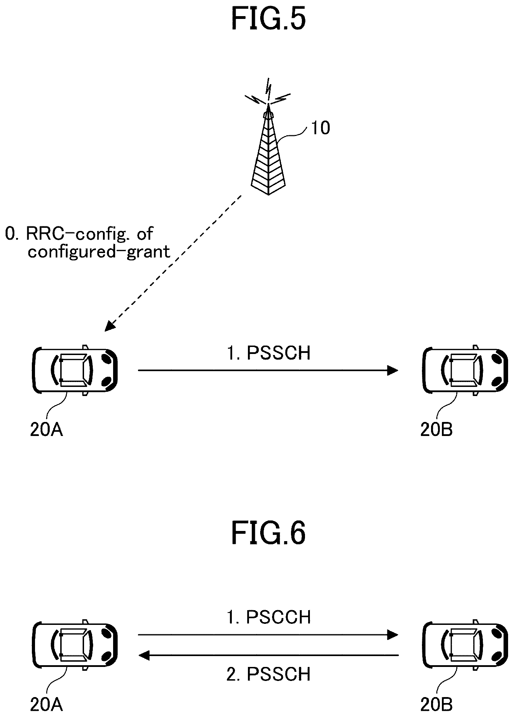

Fig. 5 is a drawing illustrating an example (4) of a V2X transmission mode. In the transmission mode of sidelink communication shown in Fig. 5, in step 0, the sidelink resource pattern is transmitted from the base station 10 to the terminal 20A via an RRC (Radio Resource Control) configuration, or is configured in advance. Subsequently, the terminal 20A transmits PSSCH to the terminal 20B, based on the resource pattern (step 1). The transmission mode of sidelink communication illustrated in Fig. 5 may be referred to as a sidelink transmission mode 2c in NR.

Fig. 6 is a drawing illustrating an example (5) of a V2X transmission mode. In the sidelink communication transmission mode illustrated in FIG. 6, in step 1, the terminal 20A transmits sidelink scheduling to the terminal 20B via PSCCH. Next, the terminal 20B transmits PSSCH to the terminal 20A based on the received scheduling (step 2) . The transmission mode of sidelink communication illustrated in Fig. 6 may be referred to as a sidelink transmission mode 2d in NR.

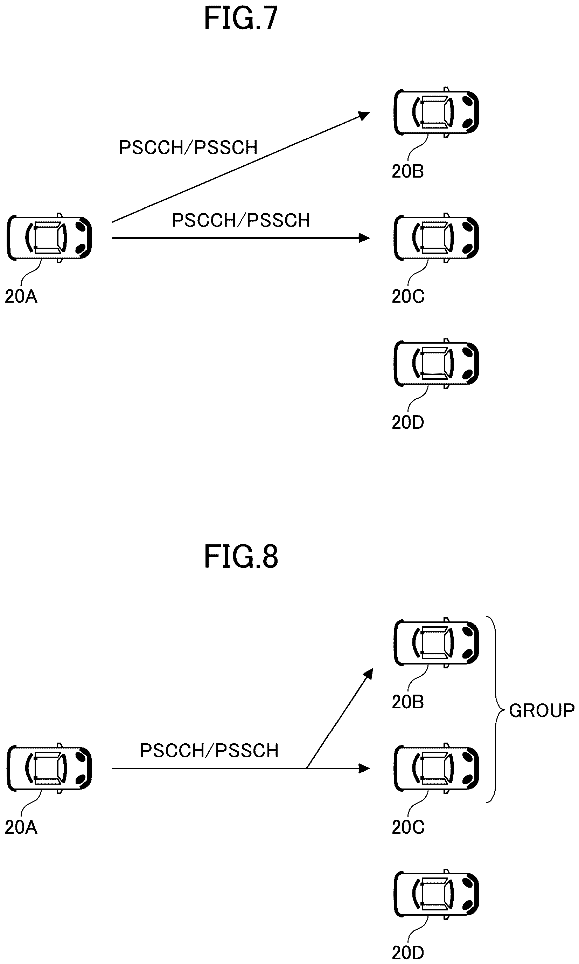

Fig. 7 is a drawing illustrating an example (1) of a V2X communication type. The sidelink communication type illustrated in Fig. 7 is uni-cast. The terminal 20A transmits PSCCH and PSSCH to terminal 20. In an example illustrated in Fig. 7, the terminal 20A performs uni-cast to the terminal 20B, and performs uni-cast to the terminal 20C.

Fig. 8 is a drawing illustrating an example (2) of a V2X communication type. The sidelink communication type illustrated in Fig. 8 is group-cast. The terminal 20A transmits PSCCH and PSSCH to a group to which one or more terminals 20 belong. In an example illustrated in Fig. 8, the group includes a terminal 20B and a terminal 20C, and the terminal 20A performs group-cast to the group.

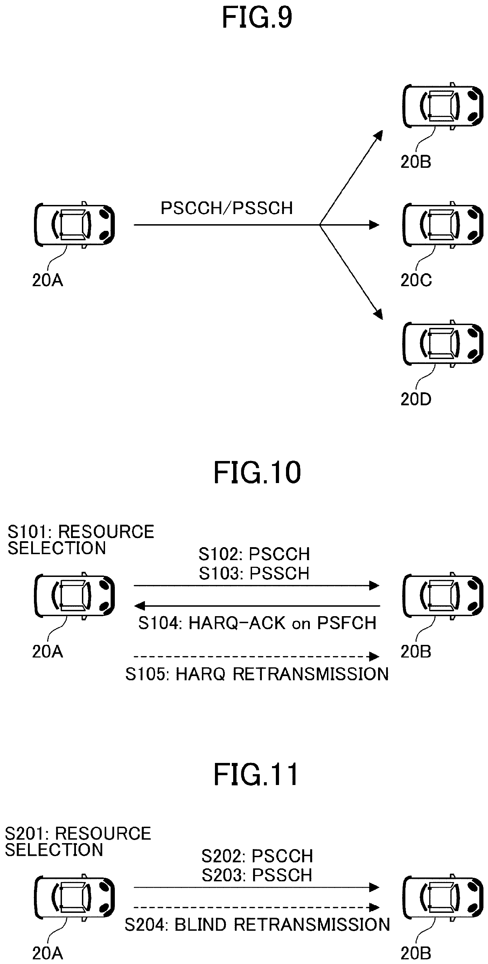

Fig. 9 is a drawing illustrating an example (3) of a V2X communication type. The sidelink communication type illustrated in Fig. 9 is broad-cast. The terminal 20A transmits PSCCH and PSSCH to one or more terminals 20. In an example illustrated in Fig. 9, the terminal 20A performs broadcast to the terminal 20B, the terminal 20C, and the terminal 20D. Note that the terminal 20A shown in Figs. 7 to 9 may be referred to as a header UE.

In addition, it is expected that HARQ (Hybrid automatic repeat request) is supported for unicast and groupcast of sidelink in NR-V2X. In addition, SFCI (Sidelink Feedback Control Information) containing a HARQ response is defined in NR-V2X. In addition, it is being discussed that SFCI is transmitted via PSFCH (Physical Sidelink Feedback Channel).

Note that, in the following description, it is assumed that PSFCH is used in the transmission of HARQ-ACK on sidelink. However, this just an example. For example, PSCCH may be used to transmit HARQ-ACK on sidelink, PSSCH may be used to transmit HARQ-ACK on sidelink, or other channels may be used to transmit HARQ-ACK on sidelink.

Hereinafter, for the sake of convenience, the overall information reported by the terminal 20 in the HARQ is referred to as HARQ-ACK. This HARQ-ACK may also be referred to as HARQ-ACK information. Further, more specifically, a codebook applied to the HARQ-ACK information reported from the terminal 20 to the base station 10 or the like is called a HARQ-ACK codebook. The HARQ-ACK codebook defines a bit string (sequence) of the HARQ-ACK information. Note that "HARQ-ACK" sends not only ACK but also NACK.

Fig. 10 is a sequence diagram illustrating an example (1) of V2X operation. As shown in Fig. 10, the wireless communication system according to an embodiment of the present invention may include a terminal 20A and a terminal 20B. Note that there are many user devices, but Fig. 10 shows a terminal 20A and a terminal 20B as examples.

Hereinafter, when the terminals 20A, 20B, or the like are not particularly distinguished, the term "terminal 20" or "user device" will be simply described. Fig. 10 shows, for example, a case where both the terminal 20A and the terminal 20B are within a coverage of a cell. However, the operation in an embodiment of the present invention embodiment can be applied to a case where the terminal 20B is outside the coverage.

As described above, in an embodiment, the terminal 20 is, for example, a device mounted in a vehicle such as an automobile and has a cellular communication function as a UE in LTE or NR and a sidelink function. Terminal 20 may be a conventional portable terminal (such as a smartphone). Further, the terminal 20 may also be an RSU. The RSU may be a UE-type RSU having the function of a UE or a gNB-type RSU having the function of a base station device.

Note that the terminal 20 need not be a single housing device. For example, even when various sensors are arranged and distributed in a vehicle, a device including the various sensors may be a terminal 20.

Further, processing contents of sidelink transmission data of the terminal 20 are basically the same as those of UL transmission in LTE or NR. For example, the terminal 20 scrambles a codeword of the transmission data, modulates to generate complex-valued symbols, and maps the complex-valued symbols to one or two layers, and performs precoding. Further, the precoded complex-valued symbols are mapped to a resource element to generate a transmission signal (e.g., complex-valued time-domain SC-FDMA signal), and the generated signal is transmitted from each antenna port.

It is noted that the base station 10 has a function of cellular communication as a base station in LTE or NR and a function of enabling communication of the terminal 20 according to an embodiment of the present invention (e.g., resource pool setting, resource allocation, etc.). Further, the base station 10 may also be an RSU (gNB-type RSU).

Further, in the wireless communication system according to an embodiment of the present invention, a signal waveform used by the terminal 20 for SL or UL may be OFDMA, SC-FDMA, or other signal waveforms.

In step S101, the terminal 20A autonomously selects a resource to be used for PSCCH and PSSCH from a resource selection window having a predetermined period. The resource selection window may be configured to the terminal 20 by the base station 10. Here, the predetermined period of the resource selection window may be specified by an implementation condition of the terminal such as a processing time or a maximum allowable packet delay time, or may be specified in advance by technical specifications, and the predetermined period may be referred to as a section in a time domain.

In step S102 and step S103, the terminal 20A transmits, using the resource autonomously selected in step S101, SCI (Sidelink Control Information) via PSCCH and/or PSSCH and transmits SL data via PSSCH. For example, the terminal 20A may transmit the PSCCH using a frequency resource adjacent to the PSSCH frequency resource with the same time resource as at least a portion of the time resource of the PSSCH.

The terminal 20B receives the SCI (PSCCH and/or PSSCH) and the SL data (PSSCH) transmitted from the terminal 20A. The received SCI may include information of a PSFCH resource for the terminal 20B to send HARQ-ACK for reception of the data. The terminal 20A may include information of the autonomously selected resource in the SCI and transmit the included information.

In step S104, the terminal 20B transmits a HARQ-ACK for the received data to the terminal 20A using the PSFCH resource specified by the received SCI.

In step S105, when the HARQ-ACK received in step S104 indicates a request for retransmission, that is, when the HARQ-ACK is a NACK (negative response), the terminal 20A retransmits the PSCCH and the PSSCH to the terminal 20B. The terminal 20A may retransmit the PSCCH and the PSSCH using an autonomously selected resource.

Note that in a case where HARQ control with HARQ feedback is not performed, step S104 and step S105 need not be performed.

Fig. 11 is a sequence diagram illustrating an example (2) of V2X operation. A non-HARQ-control-based blind retransmission may be performed to improve the transmission success rate or reach distance.

In step S201, the terminal 20A autonomously selects a resource to be used for PSCCH and PSSCH from a resource selection window having a predetermined period. The resource selection window may be configured to the terminal 20 by the base station 10.

In step S202 and step S203, the terminal 20A transmits, using the resource autonomously selected in step S201, an SCI via PSCCH and/or PSSCH, and transmits SL data via PSSCH. For example, the terminal 20A may transmit the PSCCH using a frequency resource adjacent to the PSSCH frequency resource with the same time resource as at least a portion of the time resource of the PSSCH.

In step S204, the terminal 20A retransmits, using the resource autonomously selected in step S201, the SCI via PSCCH and/or PSSCH and the SL data via PSSCH to the terminal 20B. The retransmission in step S204 may be performed multiple times.

It is noted that, if the blind retransmission is not performed, step S204 may not be performed.

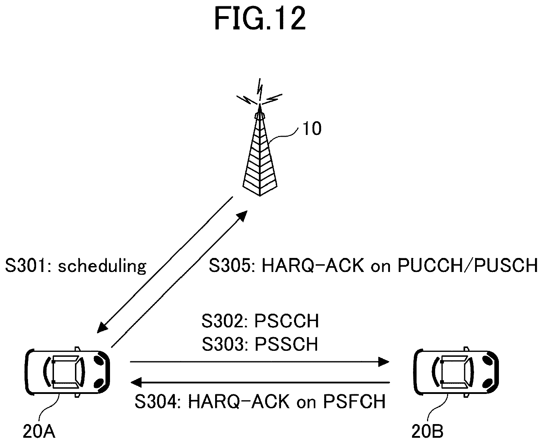

Fig. 12 is a sequence diagram illustrating an example (3) of V2X operation. The base station 10 may perform scheduling of the sidelink. That is, the base station 10 may determine a sidelink resource to be used by the terminal 20 and transmit information indicating the resource to the terminal 20. In addition, in a case where HARQ control with HARQ feedback is to be applied, the base station 10 may transmit information indicating a PSFCH resource to the terminal 20.

In step S301, the base station 10 performs SL scheduling by sending DCI (Downlink Control Information) to the terminal 20A via PDCCH. Hereafter, for the sake of convenience, the DCI for SL scheduling is called SL scheduling DCI.

Further, in Step S301, it is assumed that the base station 10 also transmits DCI for DL scheduling (which may be referred to as DL assignment) to the terminal 20A via the PDCCH. Hereafter, for the sake of convenience, the DCI for DL scheduling is called a DL scheduling DCI. The terminal 20A, which has received the DL scheduling DCI, receives DL data via PDSCH using a resource specified by the DL scheduling DCI.

In step S302 and step S303, the terminal 20A transmits, using the resource specified by the SL scheduling DCI, SCI (Sidelink Control Information) via PSCCH and/or PSSCH and transmits SL data via PSSCH. Note that, in the SL scheduling DCI, only a PSSCH resource may be specified. In this case, for example, the terminal 20A may transmit the PSCCH using a frequency resource adjacent to the PSSCH frequency resource with the same time resource as at least a portion of the time resource of the PSSCH.

The terminal 20B receives the SCI (PSCCH and/or PSSCH) and the SL data (PSSCH) transmitted from the terminal 20A. The SCI received via the PSCCH and/or PSSCH includes information of a PSFCH resource for the terminal 20B to send a HARQ-ACK for reception of the data.

The information of the resource is included in the DL scheduling DCI or SL scheduling DCI transmitted from the base station 10 in S301, and the terminal 20A acquires the information of the resource from the DL scheduling DCI or the SL scheduling DCI and includes the acquired information in the SCI. Alternatively, the DCI transmitted from the base station 10 may not include the information of the resource, and the terminal 20A may autonomously include the information of the resource in the SCI and transmit the SCI including the information.

In step S304, the terminal 20B transmits a HARQ-ACK for the received data to the terminal 20A using the PSFCH resource specified by the received SCI.

In step S305, the terminal 20A transmits the HARQ-ACK using, for example, a PUCCH (Physical uplink control channel) resource specified by the DL scheduling DCI (or SL scheduling DCI) at the timing (e.g., slot-by-slot timing) specified by the DL scheduling DCI (or SL scheduling DCI), and the base station 10 receives the HARQ-ACK. The HARQ-ACK codebook may include HARQ-ACK received from the terminal 20B or HARQ-ACK generated based on PSFCH that is not received, and HARQ-ACK for the DL data. Note, however, the HARQ-ACK for DL data is not included if DL data is not allocated. In NR Rel.16, the HARQ-ACK codebook does not include HARQ-ACK for DL data.

Note that in a case where HARQ control with HARQ feedback is not performed, step S304 and/or step S305 need not be performed.

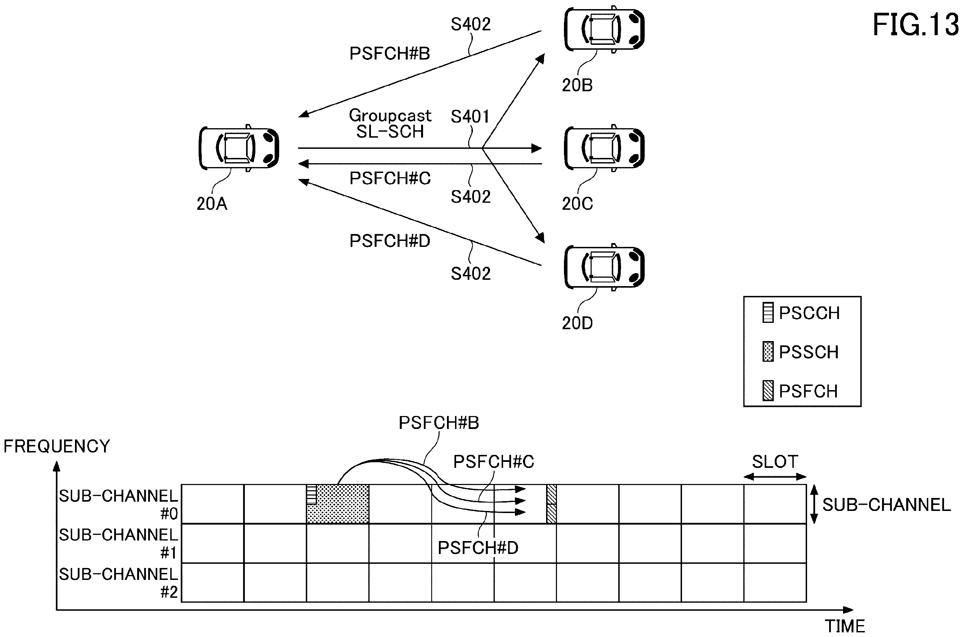

Fig. 13 is a sequence diagram illustrating an example (4) of V2X operation. As described above, it is supported in the NR sidelink that the HARQ response is transmitted via PSFCH. It is noted that, with respect to the format of PSFCH, the same format as that of PUCCH (Physical Uplink Control Channel) format 0 can be used, for example. That is, the PSFCH format may be a sequence-based format with a PRB (Physical Resource Block) size of 1, ACK and NACK being identified by the difference of sequences and/or cyclic shifts. The format of PSFCH is not limited to the above-described format. PSFCH resources may be located at the last symbol of a slot or a plurality of last symbols of a slot. Further, a period N may be configured or predefined for the PSFCH resource. The period N may be configured or predefined in units of slot.

In Fig. 13, the vertical axis corresponds to the frequency domain and the horizontal axis corresponds to the time domain. PSCCH may be arranged at the first (beginning) symbol, may be arranged at a plurality of first symbols of a slot, or may be arranged at a plurality of symbols from a symbol other than the first symbol of a slot. PSFCH resources may be arranged at the last (ending) symbol of a slot, or may be arranged at a plurality of last symbols. Note that consideration of a symbol for AGC (Automatic Gain Control) and a symbol for switching transmission/reception may be omitted for the above "beginning of a slot" and "ending of a slot". That is, for example, in a case where one slot is composed of 14 symbols, the "beginning of a slot" and the "ending of a slot" may respectively mean a first symbol and a last symbol in 12 symbols in which the first symbol and the last symbol are excluded. In an example shown in Fig. 13, three subchannels are configured in a resource pool, and two PSFCHs are arranged in the third slot after a slot in which PSSCH is arranged. Arrows from PSSCH to PSFCH indicate an example of PSFCH associated with PSSCH.

In a case of groupcast option 2 in which an ACK or NACK is transmitted in a HARQ response in the NR-V2X groupcast, it is necessary to determine resources used for transmitting and receiving PSFCH. As shown in Fig. 13, in step S401, the terminal 20A, which is the transmitting side terminal 20, performs groupcast with respect to the terminal 20B, the terminal 20C, and the terminal 20D, which are the receiving side terminals 20, via SL-SCH. In the subsequent step S402, the terminal 20B uses PSFCH#B, the terminal 20C uses PSFCH#C, and the terminal 20D uses PSFCH#D to transmit HARQ responses to the terminal 20A. Here, as shown in an example of Fig. 13, in a case where the number of PSFCH resources available is less than the number of receiving side terminals 20 belonging to the group, it is necessary to determine how to allocate PSFCH resources. It is noted that the transmitting side terminal 20 may obtain the number of the receiving side terminals 20 in the groupcast. Note that, in groupcast option 1, only NACK is transmitted as a HARQ response, and ACK is not transmitted.

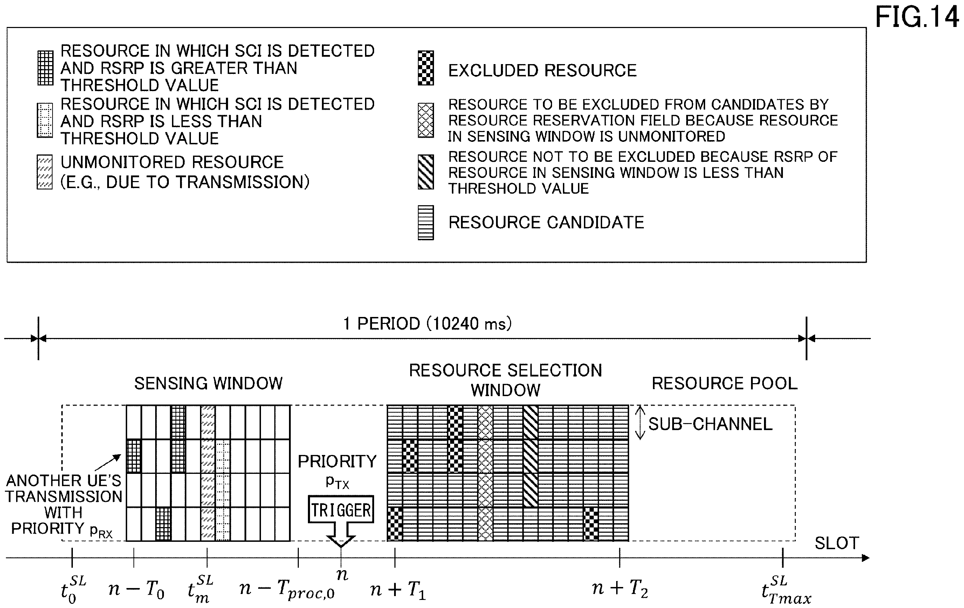

Fig. 14 is a drawing illustrating an example of a sensing operation in NR. In the resource allocation mode 2, the terminal 20 selects a resource and performs transmission. As illustrated in Fig. 14, the terminal 20 performs sensing in a sensing window in a resource pool. According to the sensing, the terminal 20 receives a resource reservation field or a resource assignment field included in an SCI transmitted from another terminal 20, and identifies available resource candidates in a resource selection window in the resource pool, based on the received field. Subsequently, the terminal 20 randomly selects a resource from the available resource candidates.

Further, as shown in Fig. 14, the configuration of the resource pool may have a period. For example, the period may be a period of 10240 milliseconds. Fig. 14 is an example in which slots from slot t₀^{SL} to slot t_{Tmax}^{SL} are configured as a resource pool. The resource pool in each cycle may have an area configured by, for example, a bitmap.

In addition, as illustrated in Fig. 14, it is assumed that a transmission trigger in the terminal 20 occurs in a slot n and the priority of the transmission is p_{TX}. In the sensing window from slot n-To to the slot immediately before the slot n-T_{proc, 0}, the terminal 20 can detect, for example, that another terminal 20 is performing transmission having priority p_{RX}. In a case where an SCI is detected in the sensing window and the RSRP (Reference Signal Received Power) exceeds a threshold value, the resource in the resource selection window corresponding to the SCI is excluded. In addition, in a case where an SCI is detected in the sensing window and the RSRP is less than the threshold value, the resource in the resource selection window corresponding to the SCI is not excluded. The threshold value may be, for example, a threshold value Th_{pTX, pRX} configured or defined for each resource in the sensing window, based on the priority p_{TX} and the priority p_{RX}.

In addition, a resource in the resource selection window that is a candidate of resource reservation information corresponding to a resource that is not monitored in the sensing window due to transmission, such as the slot tₘ^{SL} shown in Fig. 14, is excluded.

In the resource selection window from slots n+T₁ to n+T₂, as shown in Fig. 14, resources occupied by other UEs are identified, and resources from which the identified resources are excluded become available resource candidates. Assuming that the set of available resource candidates is S_{A}, in a case where the S_{A} is less than 20% of the resource selection window, the resource identification may be performed again by raising the threshold value Th_{pTX, pRX} configured for each resource in the sensing window by 3 dB. That is, by raising the threshold value Th_{pTX, pRX} and performing the resource identification again, resources that are not excluded because the RSRP is below the threshold value may be increased, and the set S_{A} of resource candidates may become greater than 20% of the resource selection window. The operation of raising the threshold value Th_{pTX, pRX} configured for each resource in the sensing window by 3 dB, and of performing the resource identification again in a case where the S_{A} is less than 20% of the resource selection window, may be repeatedly performed.

The lower layer of the terminal 20 may report the S_{A} to the higher layer. The higher layer of the terminal 20 may perform random selection for the S_{A} to determine a resource to be used. The terminal 20 may perform sidelink transmission using the determined resource.

Although an operation of the transmission-side terminal 20 has been described with reference to Fig. 14, the reception-side terminal 20 may detect data transmission from another terminal 20, based on a result of sensing or partial sensing and receive data from another terminal 20.

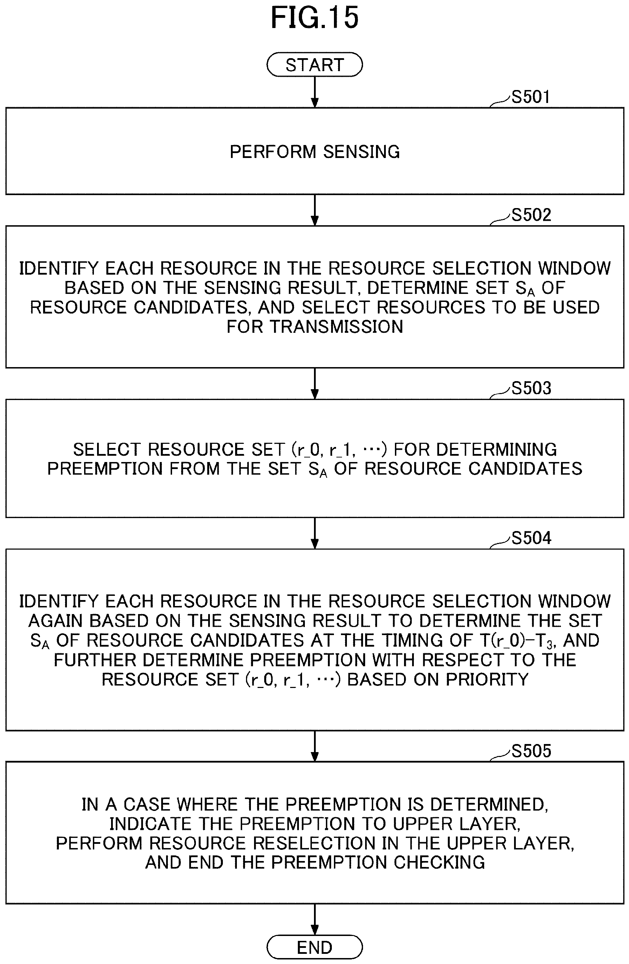

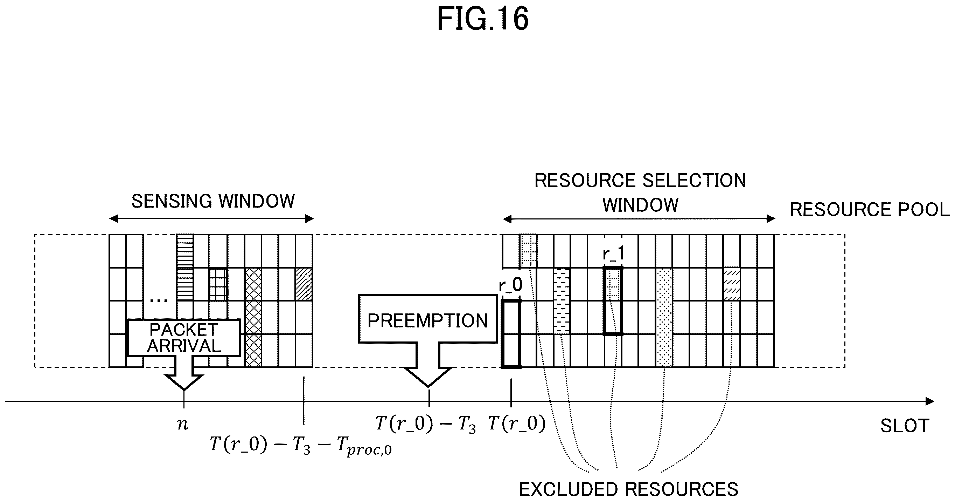

Fig. 15 is a flowchart illustrating an example of preemption in NR. Fig. 16 is a drawing illustrating an example of preemption in NR. In step S501, the terminal 20 performs sensing in the sensing window. In a case where the terminal 20 performs power-saving operation, sensing may be performed for a predetermined limited period of time. Subsequently, the terminal 20 determines a set S_{A} of resource candidates by identifying each resource in the resource selection window based on the sensing result, and selects a resource to be used for transmission (S502). Subsequently, the terminal 20 selects a resource set (r_0, r_1, ...) for determining preemption from the set S_{A} of resource candidates (S503). The resource set may be indicated to the PHY layer from the higher layer as a resource for determining whether or not the resource is preempted.

In step S504, the terminal 20 determines the set S_{A} of resource candidates by re-identifying each resource in the resource selection window based on the sensing result and determines preemption for the resource set (r_0, r_1, ...) based on the priority at the timing T(r_0)-T₃ shown in Fig. 16. For example, r_1 shown in Fig. 16 is not included in the S_{A} because the SCI transmitted from the other terminal 20 is detected by re-sensing. In a case where preemption is enabled, in a case where the value prio_RX indicating the priority of the SCI transmitted from the other terminal 20 is lower than the value prio_TX indicating the priority of the transport block transmitted from the terminal 20 itself, the terminal 20 determines that the resource r_1 is preempted. Note that the lower the value indicating the priority, the higher the priority. That is, in a case where the value prio_RX indicating the priority of the SCI transmitted from the other terminal 20 is higher than the value prio_TX indicating the priority of the transport block transmitted from the terminal 20 itself, the terminal 20 does not exclude the resource r_₁ from the S_{A}. Alternatively, in a case where preemption is valid only for a specific priority (e.g., in a case where sl-PreemptionEnable is one of pl1, pl2, ..., pl8), this priority is referred to as prio_pre. At this point, in a case where the value prio_RX indicating the priority of the SCI transmitted from the other terminal 20 is lower than prio_pre, and prio_RX is lower than the value prio_TX indicating the priority of the transport block transmitted from the terminal 20 itself, the terminal 20 determines that the resource r_1 has been preempted.

In step S505, in a case where the preemption is determined in step S504, the terminal 20 indicates, to the higher layer, the preemption, reselects the resource in the higher layer, and ends the preemption check.

Note that, in a case where re-evaluation is performed in place of the preemption check, in a case where the S_{A} does not contain resources of the resource set (r_0, r_1, ...) after the set S_{A} of resource candidates is determined in step S504, the resources are not used and resources are reselected in the higher layer.

Here, power saving based on random resource selection and partial sensing is being discussed in the NR Release 17 sidelink. For example, for power saving, the sidelink random resource selection and partial sensing in LTE Release 14 may be applied to NR Release 16 sidelink resource allocation mode 2. The terminal 20 to which partial sensing is applied performs reception and sensing only in specific slots in the sensing window.

In addition, in NR Release 17, eURLLC (enhanced Ultra Reliable Low Latency Communication) is being discussed with inter-UE coordination as a baseline. For example, the terminal 20A may share information indicating a resource set with the terminal 20B, and the terminal 20B may take this information into account in selecting resources for transmission.

For example, as a resource allocation method in the sidelink, the terminal 20 may perform full sensing as shown in Fig. 14. Also, the terminal 20 may perform partial sensing in which the terminal 20 performs resource identification by sensing only limited resources as compared to full sensing, and selects resources from the identified resource set. Also, the terminal 20 may perform random selection in which the terminal 20 determines resources in the resource selection window as an identified resource set without performing resource exclusion from the resources in the resource selection window, and performs resource selection from the identified resource set.

In Release 17, operations may be specified by assuming 2 types of terminals 20. One is Type A, where a Type A terminal 20 is not capable of receiving any sidelink signals and channels. However, receiving PSFCH and S-SSB may be an exception.

The other is Type D, where a Type D terminal 20 is capable of receiving all sidelink signals and channels as defined in Release 16. However, partially receiving the sidelink signals and channels is not excluded.

Also, in Release 17, multiple resource allocation methods can be configured for a given resource pool.

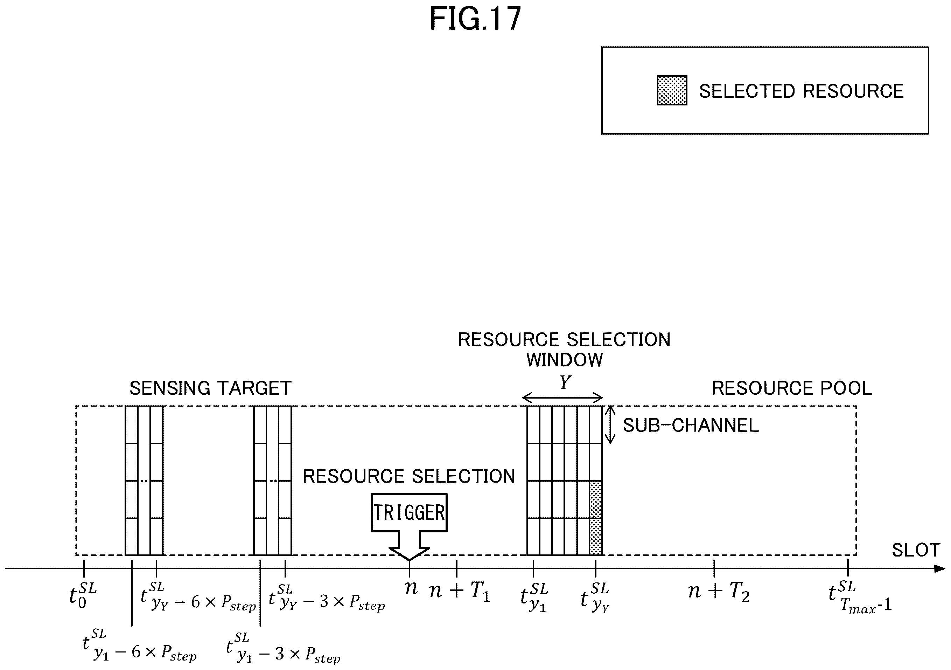

Fig. 17 is a drawing illustrating an example of a partial sensing operation in NR. In a case where partial sensing is configured by the upper layer in the NR sidelink, the terminal 20 selects a resource to perform transmission as shown in Fig. 17. As shown in Fig. 17, the terminal 20 performs partial sensing for a portion of the sensing window in the resource pool, i.e., for the sensing target. According to the partial sensing, the terminal 20 receives a resource reservation field contained in the SCI transmitted from the other terminal 20 and identifies available resource candidates in the resource selection window in the resource pool based on the field. Subsequently, the terminal 20 randomly selects resources from the available resource candidates.

Fig. 17 shows an example in which slots from slot t₀^{SL} to slot t_{Tmax -1}^{SL} are configured as a resource pool. The resource pool may have a target area configured by, for example, a bitmap. As shown in Fig. 17, the transmission trigger at the terminal 20 may occur in slot n. As shown in Fig. 17, from among the slots from slots n+T₁ to n+T₂, Y slots from slot t_{y1}^{SL} to slot t_{yY}^{SL} may be configured as a resource selection window.

The terminal 20 can detect, for example, that another terminal 20 is transmitting in one or more sensing targets with the Y slot length from slot t_{y1-k×PStep}^{SL} to slot t_{yY-k×Pstep}^{SL}. k may be determined by, for example, a 10-bit bitmap. Fig. 17 shows an example in which the third and sixth bits of the bitmap are configured to be "1" to indicate partial sensing. That is, in Fig. 17, slots from slot t_{y1-6×Pstep}^{SL} to slot t_{yY-6×Pstep}^{SL} and slots from slot t_{y1-3×Pstep}^{SL} to slot t_{yY-3×Pstep}^{SL} are configured as sensing targets. As described above, the k-th bit of the bitmap may correspond to a sensing window from slot t_{y1-k×Pstep}^{SL} to slot t_{yY-k×Pstep}^{SL}. Note that yᵢ corresponds to an index (1 ... Y) in the Y slot.

Note that k may be configured in the 10-bit bitmap or pre-specified and Pₛₜₑₚ may be 100 ms. However, in a case of performing SL communication in DL and UL carriers, Pₛₜₑₚ may be (U/(D+S+U))*100 ms. U corresponds to the number of UL slots, D corresponds to the number of DL slots, and S corresponds to the number of special slots.

In a case where an SCI is detected in the above sensing target and the RSRP is greater than the threshold value, the resource in the resource selection window corresponding to the resource reservation field of the SCI is excluded. Also, in a case where an SCI is detected in the sensing target and the RSRP is less than the threshold value, the resource in the resource selection window corresponding to the resource reservation field of the SCI is not excluded. The threshold value may be, for example, a threshold Th_{pTX,pRX} configured or defined for each resource in the sensing target based on the transmission-side priority p_{TX} and reception-side priority pRX.

As shown in Fig. 17, in a resource selection window in which slots are configured in the interval [n+T₁, n+Tz], the terminal 20 identifies a resource occupied by another UE, and resources excluding the resource becomes candidate resources that can be used. Note that the Y slots need not be contiguous. Assuming that the set of available resource candidates is S_{A}, in a case where S_{A} is less than 20% of the resources in the resource selection window, resource identification may be performed again by raising the threshold value Th_{pTX,pRX} configured for each resource of the sensing target by 3 dB.

That is, resources that are not excluded because RSRP is less than the threshold value may be increased by raising the threshold value Th_{pTX,pRX} and performing resource identification again. In addition, the RSSI of each resource in the S_{A} may be measured, and resources with the lowest RSSI may be added to the set S_{B}. The operation of adding resources with the lowest RSSI included in the S_{A} to the S_{B} may be repeated until the set S_{B} of resource candidates becomes at least 20% of the resource selection window.

The lower layer of the terminal 20 may report the S_{B} to the upper layer. The upper layer of the terminal 20 may perform random selection with respect to the S_{B} to determine the resources to be used. The terminal 20 may perform sidelink transmission using the determined resources. Note that the terminal 20 may use the resource periodically for a predetermined number of times (e.g., Cᵣₑₛₑₗ times) without sensing after the resource is secured once.

Here, in the terminal 20 that performs PSCCH/PSSCH transmission according to partial sensing, details of a method of applying reevaluation or preemption checking have not been specified. As described above, in partial sensing, only some slots are sensed. On the other hand, in the operation of reevaluation or preemption checking for a terminal 20 that performs full sensing, because the timing of the selected resource is used as a reference point to determine the sensing target, it is necessary to assume, as the sensing target, the slots corresponding to all slots that can be the selected resource.

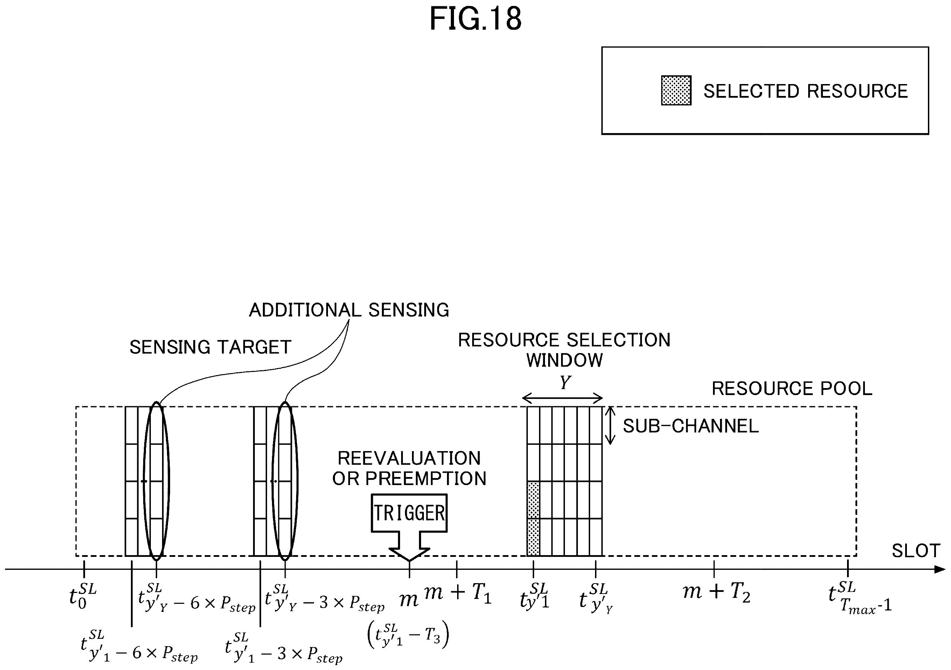

Fig. 18 is a drawing illustrating an example of reevaluation or preemption checking. As shown in Fig. 18, in a case where reevaluation or preemption checking is performed in a terminal 20 that performs partial sensing, because additional sensing needs to be performed, the operation becomes similar to that of the full sensing and power consumption may increase.

Therefore, the terminal 20 that performs resource selection according to partial sensing may receive SCI from another terminal 20 during a predetermined period A and perform reevaluation or preemption checking based on the received information. Hereafter, the term "reevaluation or preemption checking" may be replaced with "reevaluation and/or preemption checking".

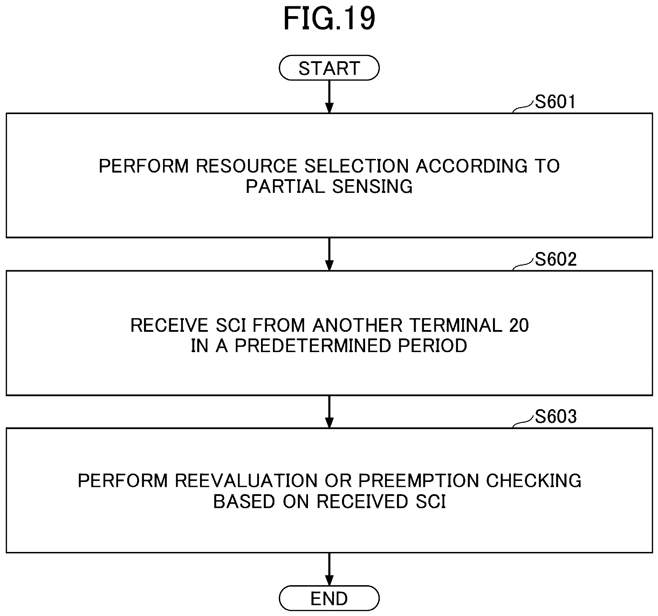

Fig. 19 is a flowchart illustrating an example of communication in an embodiment of the present invention. In step S601, the terminal 20 performs resource selection according to partial sensing. In subsequent step S602, the terminal 20 receives SCI from another terminal 20 in a predetermined period A. In subsequent step S603, the terminal 20 performs reevaluation or preemption checking based on the received SCI.

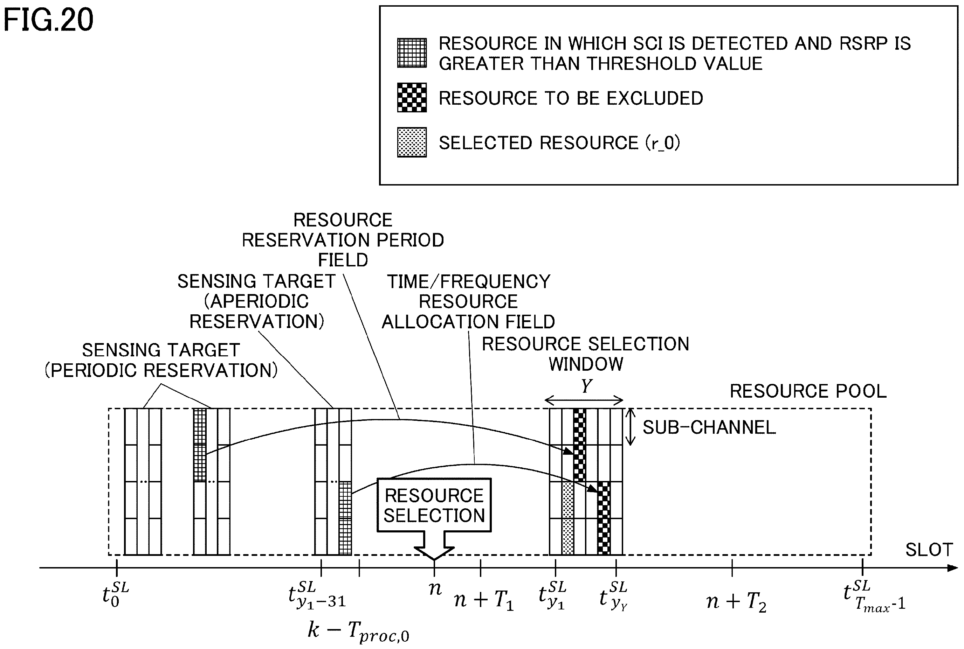

Fig. 20 is a drawing illustrating an example of resource selection according to partial sensing in an embodiment of the present invention. Resource selection according to partial sensing in step S601 above may be performed as shown in Fig. 20. The terminal 20 senses the sensing target corresponding to the periodic reservation and the sensing target corresponding to the aperiodic reservation to identify the resource in the resource selection window. As shown in Fig. 20, in the sensing target, resources in the resource selection window corresponding to resources in which SCI is detected and the RSRP is greater than a threshold value may be excluded.

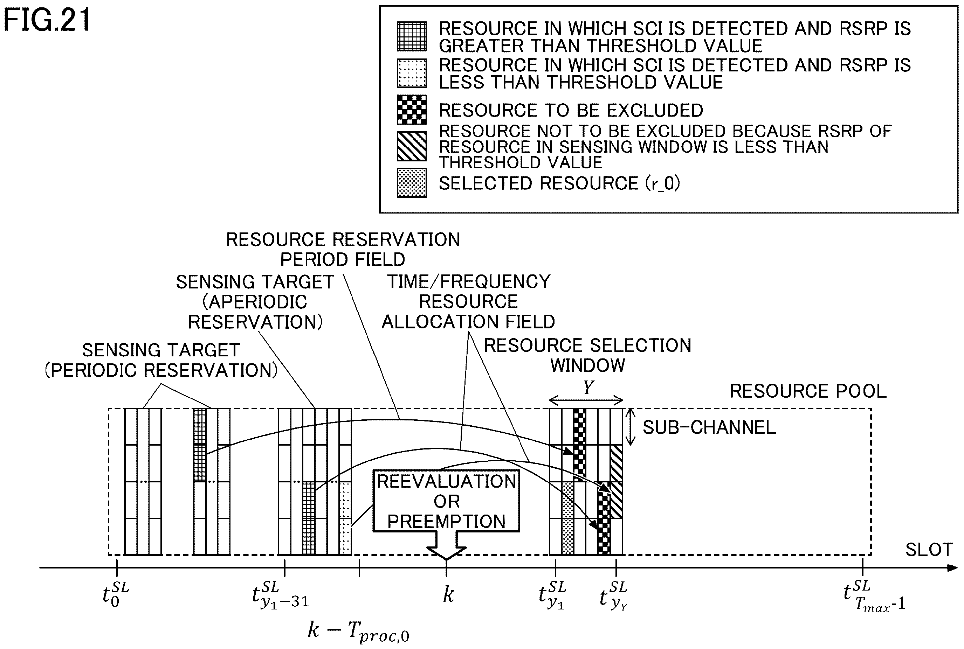

Fig. 21 is a drawing illustrating an example (1) of reevaluation or preemption checking in an embodiment of the present invention. When performing the reevaluation or preemption checking in step S603 above, the period for determining a candidate for identifying the resource may be a predetermined time interval B. The predetermined time interval B may be a selection window.

As shown in Fig. 21, the predetermined time interval B may be the same as the time interval at the time of target resource selection for reevaluation or preemption checking.

As shown in Fig. 21, with respect to the predetermined period A, the method of determining the sensing target may be the same as the method at the time of resource selection according to partial sensing. That is, among the sensing targets, the sensing target determined based on the resource reservation period field may be the same as the sensing target at the time of target resource selection.

Also, as shown in Fig. 21, with respect to the predetermined period A, among the sensing targets, the sensing target determined based on the aperiodic reservation may be different from the sensing target at the time of the target resource selection. The aperiodic reservation may be a reservation based on a time resource allocation field. For example, when the leading slot in a predetermined time interval B is referred to as slot n2, slot n2-31 may be the leading slot of the sensing target. For example, when the slot performing reevaluation or preemption checking is referred to as slot k, slots k-X may be the last slot of the sensing target. X may be determined based on the value T_{proc,0} used to determine the sensing target at the time of resource selection, or X=T_{proc,0}-1. In addition, X is not required to be determined based on the value T_{proc,0} used to determine the sensing target at the time of resource selection, or may be determined based on other definitions or other configurations.

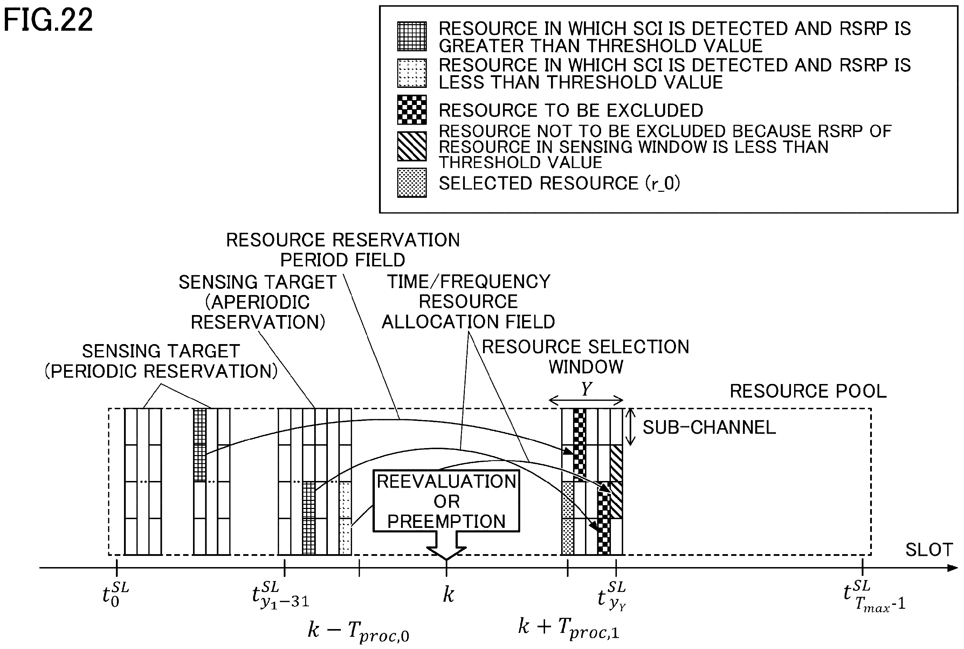

Fig. 22 is a drawing illustrating an example (2) of reevaluation or preemption checking in an embodiment of the present invention. When performing the reevaluation or preemption checking in step S603 above, the period for determining a candidate for identifying a resource may be a predetermined time interval B. As shown in Fig. 22, the predetermined time interval B may be a part of the time interval at the time of target resource selection for reevaluation or preemption checking.

With respect to the predetermined time interval B, the predetermined time interval B may be determined based on slot k, where slot k is a slot in which the reevaluation or preemption checking is performed. For example, slot k-X and slots after slot k-X may be defined as the predetermined time interval B. X may be T_{proc,0}. The predetermined time interval B may include slot k-X or is not required to include slot k-X.

In addition, slot k+W and slots after slot k+W may be defined as the predetermined time interval B. W may be T_{proc,1}, T_{proc,1}≤W, or T_{proc,1}≥W. The predetermined time interval B may include slot k+W or is not required to include slot k+W. Fig. 22 shows an example where the predetermined time interval B starts from k+T_{proc,1.}

Also, when a slot of the selected resource to be a target of reevaluation or preemption checking is referred to as slot m0, the predetermined time interval B may be determined based on slot m0. For example, slot m0 and slots after slot m0 may be defined as the predetermined time interval B. The predetermined time interval B may include slot m0 or is not required to include slot m0.

With respect to the predetermined period A, a method of determining a sensing target may be the same as the method at the time of selecting resources according to partial sensing. That is, among the sensing targets, the sensing target determined based on the resource reservation period field may be a part of the sensing target at the time of the target resource selection.

Also, as shown in Fig. 22, with respect to the predetermined period A, among the sensing targets, the sensing target determined based on the aperiodic reservation may be different from the sensing targets at the time of the target resource selection. The aperiodic reservation may be a reservation based on the time resource allocation field. For example, when the leading slot in a predetermined time interval B is referred to as slot n2, slot n2-31 may be the leading slot of the sensing target. For example, when the slot for performing reevaluation or preemption checking is referred to as slot k, slots k-X may be the last slot of the sensing target. X may be determined based on the value T_{proc,0} used to determine the sensing target at the time of resource selection, or X=T_{proc,0}-1. In addition, X is not required to be determined based on the value T_{proc,0} used to determine the sensing target at the time of resource selection, or may be determined based on other definitions or other configurations.

In addition, the predetermined time interval B may be different from the time interval at the time of target resource selection for reevaluation or preemption checking. With respect to the predetermined time interval B, the number of slots in the time interval may be the same or different. The predetermined time interval B may be determined by the same method as the time interval determination method at the time of resource selection according to partial sensing.

With respect to the predetermined period A, among the sensing targets, the sensing target determined based on the resource reservation period field may be any of 1) to 3) shown below.
1) The slots corresponding to the time interval at the time of target resource selection for reevaluation or preemption checking. That is, among the sensing targets, the sensing target determined based on the resource reservation period field may be the same as the sensing target at the time of target resource selection.
2) The common slots between the slots corresponding to a time interval at the time of target resource selection for reevaluation or preemption checking and the slots corresponding to the predetermined time interval B. That is, among the sensing targets, the sensing target determined based on the resource reservation period field may be a part of the sensing target at the time of target resource selection.
3) The sensing target based on the resource reservation period field is not configured. That is, the sensing target may include only the sensing target determined based on the aperiodic reservation. However, in a case where a periodic reservation is made in a sensing target determined based on an aperiodic reservation, a resource exclusion operation may be performed based on the periodic reservation.

Also, in a case where the predetermined time interval B is different from the time interval at the time of target resource selection for reevaluation or preemption checking, with respect to the predetermined period A, among the sensing targets, the sensing target determined based on the aperiodic reservation may be different from the sensing target at the time of target resource selection. The aperiodic reservation may be a reservation based on the time resource allocation field. For example, when the leading slot in a predetermined time interval B is referred to as slot n2, slot n2-31 may be the leading slot of the sensing target. For example, when the slot for performing reevaluation or preemption checking is referred to as slot k, slot k-X may be the last slot of the sensing target. X may be determined based on the value T_{proc,0} used to determine the sensing target at the time of resource selection, or X=T_{proc,0}-1. In addition, X is not required to be determined based on the value T_{proc,0} used to determine the sensing target at the time of resource selection, or may be determined based on other definitions or other configurations.

The information used for reevaluation or preemption checking in step S603 above may be at least one of the information shown in 1) to 6) from among the SCIs received during the predetermined period A in step S602 above.
1) Priority
2) Time resource allocation field
3) Frequency resource allocation field (Frequency resource assignment field)
4) Resource reservation period field
5) Field related to a resource allocation type (e.g., a field that indicates full sensing, partial sensing or random selection)

For example, the terminal 20 may ignore the resource reservation period field and perform reevaluation or preemption checking based on a reservation according to the time resource allocation field (i.e., a reservation for slots from a slot after 0 slots to a slot after 31 slots).

In addition, the terminal 20 may perform reevaluation or preemption checking in step S603 above based on the timing of transmission by the terminal 20 itself. For example, the terminal 20 may perform reevaluation or preemption checking based on a time resource allocation field or a resource reservation period field that can be indicated by another terminal 20 in the slot where the transmission is performed by the terminal 20 itself.

Also, parameters used for the operation of reevaluation or preemption checking performed by the terminal 20 that performs resource selection according to partial sensing may be specified. For example, the parameters may be different from those for resource selection according to full sensing or random selection. Also, for example, the parameters may be different from those for reevaluation or preemption checking performed by the terminal 20 performing resource selection according to full sensing or random selection.

Also, the parameters used for the operation of reevaluation or preemption checking performed by the terminal 20 performing resource selection according to partial sensing may be at least one of 1) and 2) shown below.
1) Upper layer parameters that determine whether reevaluation or preemption checking is to be enabled or disabled. The upper layer parameters may be parameters that are configured for each priority.
2) Parameters for determining resource identification candidates (parameters related to the selection window). For example, the parameters may include T2min for each priority, the parameters may include the RSRP threshold value configured for each (transmission priority, reception priority), the parameters may include the type of RSRP measurement target channel for sensing, i.e. PSCCH or PSSCH, or the parameters may include T_{proc,1.}

Note that, in a case where the selection window is referred to as [n+T1, n+T2], the terminal 20 configures T1 and T2 so that 1) and 2) below are satisfied.
1) 0≤T1≤T_{proc,1}
2) T2min<T2<Remaining PDB (Packet delay budget)

Also, the operation of the reevaluation or preemption checking performed by the terminal 20 performing resource selection according to partial sensing may be similar to the operation of the reevaluation or preemption checking performed by the terminal 20 performing resource selection according to full sensing or random selection. However, the sensing target may be a predetermined period in the aforementioned step S602, or the information used may be the information used for the reevaluation or preemption checking in step S603.

Also, the operation of the reevaluation or preemption checking performed by the terminal 20 that performs resource selection according to partial sensing may be different from the operation of the reevaluation or preemption checking performed by the terminal 20 that performs resource selection according to full sensing or random selection. For example, only resources to be used may be specified as the identification target without specifying a selection window, and availability of the resources may be determined based on: the presence or absence of another terminal 20 that reserves the resources; the priority; and the RSRP.

Also, in a case where it is determined that at least a part of the selected resources cannot be used according to the reevaluation or preemption checking performed by the terminal 20 that performs resource selection according to partial sensing, a predetermined operation shown in 1) or 2) below may be performed.
1) The terminal 20 may perform a resource reselection operation. For example, the resource reselection according to partial sensing may be performed. For example, the resource selection may be performed randomly from an identified set of resources at the time of reevaluation or preemption checking.
2) In a case where some resources are available, the terminal 20 may use those resources without performing reselection. For example, resource reselection may be performed only in a case where no resource is available.

Also, in a case where the terminal 20 that performs resource selection according to partial sensing detects successful transmission with respect to a transport block, reevaluation or preemption checking is not required to be applied to reserved resources. Detecting successful transmission may mean that an ACK has been received (at the time of ACK/NACK feedback) or that a NACK has not been received (at the time of NACK only feedback). In addition, the operation of receiving SCI in step S602 may be terminated at the timing when the successful transmission is detected.

Note that the above embodiment may be applied to the operation in which one terminal 20 configures or allocates the transmission resources of another terminal 20. That is, the resource configuration or allocation may be performed so that the above embodiment is to be satisfied.

The above embodiment is not limited to V2X terminals but may be applied to terminals performing D2D communication.

The operation in the above embodiment may be performed only in a specific resource pool. For example, the operation in the above embodiment may be performed only in a resource pool that is available for a terminal 20 of Release 17 or later.

According to the above embodiment, the probability of collision between the sidelink signal transmission of a terminal 20 performing partial sensing in the sidelink and the sidelink signal transmission of another terminal 20 can be reduced.

In other words, in direct communication between terminals, the reliability of communication at the time of autonomous resource selection can be improved.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in an embodiment.

### <Base station 10>

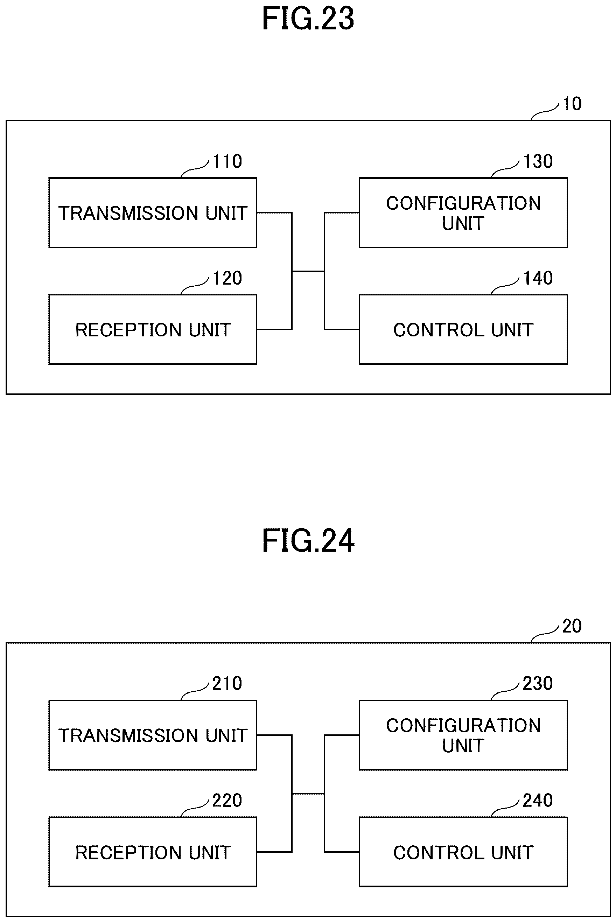

Fig. 23 is a diagram illustrating an example of a functional configuration of the base station 10. As shown in Fig. 23, the base station 10 includes a transmission unit 110, a reception unit 120, a configuration unit 130, and a control unit 140. The functional structure illustrated in Fig. 23 is merely an example. Functional divisions and names of functional units may be anything as long as it can perform operations according to an embodiment of the present invention.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, DL reference signals, and the like to the terminal 20.

The configuration unit 130 stores preset configuration information and various configuration information items to be transmitted to the terminal 20 in a storage device and reads the preset configuration information from the storage device if necessary. Contents of the configuration information are, for example, information related to configuration of D2D communication, etc.

As described in an embodiment, the control unit 140 performs processing related to the configuration in which the terminal 20 performs D2D communication. Further, the control unit 140 transmits scheduling of D2D communication and DL communication to the terminal 20 through the transmission unit 110. Further, the control unit 140 receives information related to the HARQ response of the D2D communication and the DL communication from the terminal 20 via the reception unit 120. The functional units related to signal transmission in the control unit 140 may be included in the transmission unit 110, and the functional units related to signal reception in the control unit 140 may be included in the reception unit 120.

### <Terminal 20>

Fig. 24 is a diagram illustrating an example of a functional configuration of the terminal 20. As shown in FIG. 24, the terminal 20 includes a transmission unit 210, a reception unit 220, a configuration unit 230, and a control unit 240. The functional structure illustrated in Fig. 24 is merely an example. Functional divisions and names of functional units may be anything as long as it can perform operations according to an embodiment of the present invention.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, or reference signals transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information received from the base station 10 or the terminal 20 by the reception unit 220 in the storage device and reads them from the storage device as necessary. Further, the configuration unit 230 also stores pre-configured configuration information. Contents of the configuration information are, for example, information related to configuration of D2D communication, etc.

As described in an embodiment of the present invention, the control unit 240 controls D2D communication to establish RRC connections with another terminal 20. Further, the control unit 240 performs HARQ related processing of the D2D communication and DL communication. Further, the control unit 240 transmits to the base station 10 information related to the HARQ response for D2D and DL communications to the other terminal 20 scheduled by the base station 10. Further, the control unit 240 may perform scheduling of D2D communication for another terminal 20. Further, the control unit 240 may autonomously select resources used for D2D communication from the resource selection window based on a sensing result, or may perform reevaluation or preemption. The control unit 240 also performs processing related to power saving transmission and reception in D2D communication. The control unit 240 also performs processing related to inter-terminal coordination in D2D communication. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 23 and Fig. 24), functional unit blocks are shown. The functional blocks (function units) are realized by a freelyselected combination of hardware and/or software. Further, realizing means of each functional block is not limited in particular. In other words, each functional block may be realized by a single device in which multiple elements are coupled physically and/or logically, or may be realized by two or more devices that are physically and/or logically separated and are physically and/or logically connected (e.g., wired and/or wireless). The functional blocks may be realized by combining the above-described one or more devices with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

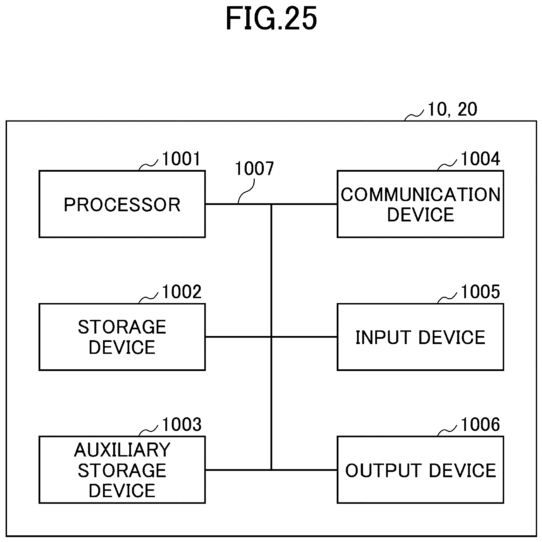

For example, the base station 10, terminal 20, etc., according to an embodiment of the present disclosure may function as a computer for processing the radio communication method of the present disclosure. Fig. 25 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral device, a control device, a calculation device, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 23 may be realized by control programs that are stored in the storage device 1002 and are executed by the processor 1001. Further, for example, the control unit 240 of the terminal 20 illustrated in Fig. 24 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiver, the transmission line interface, and the like, may be implemented by the communication device 1004. The transmitting/receiver may be physically or logically divided into a transmitter and a receiver.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the devices including the processor 1001, the storage device 1002, etc., are connected to each other via the bus 1007 used for communicating information. The bus 1007 may include a single bus, or may include different buses between the devices.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Summary of embodiments)

As described above, according to an embodiment of the present invention, a terminal is provided with: a transmission unit configured to select a resource according to partial sensing in a resource pool; a reception unit configured to receive control information from another terminal in the resource pool during a first period for reevaluation or preemption checking; and a control unit configured to perform reevaluation or preemption checking of the selected resource, based on the control information.

With the above configuration, the probability of collision between the sidelink signal transmission by the terminal 20 that performs partial sensing in the sidelink and the sidelink signal transmission by the other terminal 20 can be reduced. That is, in direct communication between terminals, the reliability of communication can be improved at the time of autonomous resource selection.

The control unit may determine, as a second period for determining a candidate for identifying a resource at a time of performing reevaluation or preemption checking, all or a part of a period at a time of selecting the resource according to partial sensing. With this configuration, the probability of collision between the sidelink signal transmission by the terminal 20 performing partial sensing in the sidelink and the sidelink signal transmission by the other terminal 20 can be reduced.

The control unit may determine the first period based on the second period. With this configuration, the probability of collision between the sidelink signal transmission of the terminal 20 performing partial sensing in the sidelink and the sidelink signal transmission of the other terminal 20 can be reduced.

The control unit may perform reevaluation or preemption checking based on information related to resource reservation included in the control information and a candidate resource that can be reserved by another terminal at a timing at which the terminal performs transmission. With this configuration, the probability of collision between the sidelink signal transmission of the terminal 20 performing partial sensing in the sidelink and the sidelink signal transmission by the other terminal 20 can be reduced.

The control unit may determine resource availability by using only the resource selected according to partial sensing as an identification target. With this configuration, the power consumption required for reevaluation or pre-emption checking of the terminal 20 performing partial sensing in the side link can be reduced.

In addition, according to an embodiment of the present invention, a communication method is provided in which a terminal performs: selecting a resource according to partial sensing in a resource pool; receiving control information from another terminal in the resource pool during a first period for reevaluation or preemption checking; and performing reevaluation or preemption checking of the selected resource, based on the control information.

With the above configuration, the probability of collision between the sidelink signal transmission of the terminal 20 performing partial sensing in the sidelink and the sidelink signal transmission of the other terminal 20 can be reduced. That is, in direct communication between terminals, the reliability of communication can be improved when autonomous resources are selected.

### (Supplement of embodiments)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the devices may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication (transmission, notification) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another device.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission device, reception device, communication device, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include a device that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above devices may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive OR"

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a subslot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the UE will not transmit and receive signals/channels outside the activated BWP. It should be noted that the terms "cell" and "carrier" in this disclosure may be replaced by "BWP".

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may change in various ways.

In the present disclosure, where an article is added by translation, for example "a", "an", and "the", the disclosure may include that the noun following these articles is plural.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

In this disclosure, SCI is an example of control information. The sensing window is an example of the first period. The selection window is an example of the second period.

As described above, the present disclosure has been described in detail. It is apparent to a person skilled in the art that the present disclosure is not limited to one or more embodiments described in the present disclosure. Modifications, alternatives, replacements, etc., of the present disclosure may be possible without departing from the subject matter and the scope of the present disclosure defined by the descriptions of claims. Therefore, the descriptions of the present specification are for illustrative purposes only, and are not intended to be limitations to the present disclosure.

### [DESCRIPTION OF THE REFERENCE NUMERALS]

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 1001: Processor
- 1002: Storage device
- 1003: Auxiliary storage device
- 1004: Communication device
- 1005: Input device
- 1006: Output device

## Claims

1. A terminal comprising:
a transmission unit configured to select a resource according to partial sensing in a resource pool;
a reception unit configured to receive control information from another terminal in the resource pool during a first period for reevaluation or preemption checking; and
a control unit configured to perform reevaluation or preemption checking of the selected resource, based on the control information.

2. The terminal according to claim 1, wherein the control unit determines, as a second period for determining a candidate for identifying a resource at a time of performing reevaluation or preemption checking, all or a part of a period at a time of selecting the resource according to partial sensing.

3. The terminal according to claim 2, wherein the control unit determines the first period based on the second period.

4. The terminal according to claim 1 or 2, wherein the control unit performs reevaluation or preemption checking based on information related to resource reservation included in the control information and a candidate resource that can be reserved by another terminal at a timing at which the terminal performs transmission.

5. The terminal according to claim 1, wherein the control unit determines resource availability by using only the resource selected according to partial sensing as an identification target.

6. A communication method performed by a terminal, the communication method comprising:
selecting a resource according to partial sensing in a resource pool;
receiving control information from another terminal in the resource pool during a first period for reevaluation or preemption checking; and
performing reevaluation or preemption checking of the selected resource, based on the control information.
